# EUROPEAN PATENT APPLICATION

(11) **EP 3 879 618 A1**
(43) Date of publication of application: **15.09.2021**
(21) Application number: 19887984.3
(22) Date of filing: 11.11.2019
(51) Int. Cl.: H01M 10/12, H01M 2/02, H01M 2/14

(54) **LEAD STORAGE BATTERY**

(30) Priority: 20.11.2018 JP 2018217460
(71) Applicant: GS Yuasa International Ltd., Kisshoin, Minami-ku, Kyoto-shi, Kyoto 601-8520 (JP)
(72) Inventor: HAMANO Yasuyuki, Kyoto-shi, Kyoto 601-8520 (JP)
(74) Representative: Isarpatent
(86) International application number: PCT/JP2019/044083
(87) International publication number: WO 2020/105484

(57) **Abstract**

A lead-acid battery includes: an element; an electrolyte solution; and a surrounding member that faces a bottom-side peripheral surface of the element and is not permeated by the electrolyte solution. A first clearance is formed between the bottom-side peripheral surface of the element and the surrounding member. A ratio (= S 1/S0) of a projected area S 1 of the element in a vertical direction to an area S0 surrounded by a projected image of the surrounding member in the vertical direction is 0.90 or more.

## Description

### TECHNICAL FIELD

The present invention relates to a lead-acid battery.

### BACKGROUND ART

Lead-acid batteries are in use for various applications, including automotive and industrial applications. The lead-acid battery includes, in a container, an element having a positive electrode plate, a negative electrode plate, and a separator interposed between these electrodes, and an electrolyte solution. Lead-acid batteries are required to have a long life, and thus, various attempts have been made.

Patent Document 1 describes a manufacturing method for a lead-acid battery in which an element is covered with a nonwoven fabric made of a fibrous heat-shrinkable resin and then shrunk thermally.

Patent Document 2 discloses a sealed lead-acid battery that is used in a state where an element formed by stacking a positive electrode plate and a negative electrode plate via a retainer is inserted into a container, and the plate surface of the element is set to be horizontal. A spacer having a compressive elastic modulus in the range of 190 to 411 kgf/cm² is attached to the side surface portion of the element and the bottom surface portion of the element.

### PRIOR ART DOCUMENTS

### PATENT DOCUMENTS

Patent Document 1: JP-A-2-299171
Patent Document 2: JP-A-2001-85046

### SUMMARY OF THE INVENTION

### PROBLEMS TO BE SOLVED BY THE INVENTION

In general, the life performance of a lead-acid battery is greatly affected by a deterioration in at least one of a positive electrode plate, a negative electrode plate, and a separator. In a lead-acid battery (especially a flooded-type lead-acid battery), stratification of an electrolyte solution is likely to occur during charge. Stratification is a phenomenon in which an electrolyte solution with a high specific gravity existing in the container lowers, and the difference in the specific gravity (concentration difference) of the electrolyte solution increases between the top side and the bottom side of the element. When the stratification occurs, the sulfation of the negative electrode plate tends to proceed on the bottom side of the element, and the deterioration in the positive electrode plate is promoted due to the concentration of the charge-discharge reaction on the top side of the element, thereby reducing the life.

### MEANS FOR SOLVING THE PROBLEMS

One aspect of the present invention relates to a lead-acid battery including: an element; an electrolyte solution; and a surrounding member that faces a bottom-side peripheral surface of the element and is not permeated by the electrolyte solution. A first clearance is formed between the bottom-side peripheral surface of the element and the surrounding member. A ratio (= S 1/SO) of a projected area S 1 of the element in a vertical direction to an area S0 surrounded by a projected image of the surrounding member in the vertical direction is 0.90 or more.

### ADVANTAGES OF THE INVENTION

In the lead-acid battery, the stratification of the electrolyte solution is prevented.

### BRIEF DESCRIPTION OF THE DRAWINGS

Fig. 1A is a perspective view schematically illustrating an internal structure of a flooded-type lead-acid battery according to one embodiment of the present invention.
Fig. 1B is a schematic cross-sectional view of the lead-acid battery in Fig. 1A when the lead-acid battery is cut along a line IB-IB and the inside of a cell chamber is viewed in an arrow direction (a stacking direction of an element).
Fig. 1C is a schematic cross-sectional view of the lead-acid battery in Fig. 1A when the lead-acid battery is cut along a line IC-IC, and the inside of the cell chamber is viewed in the arrow direction.
Fig. 1D is a schematic view for explaining a schematic cross section, an area S0, and a projected area S1 of one cell of the lead-acid battery in Fig. 1A when the inside of the cell chamber is viewed in a vertical direction Z from a predetermined position in a top-side portion of the cell toward the bottom
Fig. 2 is a schematic cross-sectional view of a flooded-type lead-acid battery according to another embodiment of the present invention when the inside of the cell chamber is viewed in the stacking direction of the element in accordance with the case of Fig. 1B.
Fig. 3 is a schematic view of one cell of a flooded-type lead-acid battery according to still another embodiment of the present invention when the inside of the cell chamber is viewed from a predetermined position in a top-side portion of the cell toward the bottom in the vertical direction Z.

### MODE FOR CARRYING OUT THE INVENTION

While novel features of the present invention are set forth in the appended claims, the present invention will be better understood in terms of both construction and content by the following detailed description of the drawings, taken in conjunction with other objects and features of the present invention.

A lead-acid battery according to one aspect of the present invention includes: an element, an electrolyte solution; and a surrounding member that faces a bottom-side peripheral surface of the element and does not permeate the electrolyte solution. A clearance (hereinafter referred to as a first clearance) is formed between the bottom-side peripheral surface of the element and the surrounding member. Here, the ratio (hereinafter may be referred to as S 1/SO) of a projected area S 1 of the element in the vertical direction to an area S0 surrounded by a projected image of the surrounding member in the vertical direction is 0.90 or more.

In the present specification, the up-down direction of the element means the up-down direction of the lead-acid battery in the vertical direction when the lead-acid battery is in use. The bottom side of the lead-acid battery refers to a portion from the height of the upper end of the surrounding member to the lowermost end of the lead-acid battery. The top side of the lead-acid battery is a portion except for the bottom side of the lead-acid battery and is a portion from the height of the upper end of the surrounding member to the uppermost end of the lead-acid battery.

In the present specification, in the plate, the up-down direction is defined with a side on which a lug is provided as an upper side and a side opposite to the lug as a lower side.

The lead-acid battery may be either a flooded-type battery (vented battery) or a valve regulated battery (VRLA type). The lead-acid battery may be either a vertical type or a horizontal type. Note that the vertical lead-acid battery refers to a battery in which the lug of the electrode plate protrudes above the element when the lead-acid battery is in use. The horizontal lead-acid battery refers to a battery in which the lug of the electrode plate protrudes to the side of the element when the lead-acid battery is in use.

The bottom side of the element refers to, in the vertical lead-acid battery, a region from a predetermined height (hereinafter referred to as a height h) between the lowermost end and the uppermost end of a separator included in the element to the lowermost end. On the other hand, the top side of the element refers to a region except for the bottom side of the element, and in the vertical lead-acid battery, the top side of the element refers to a region from the height h of the separator constituting the element to the uppermost end. In the horizontal lead-acid battery, the electrode plates and the separators may be stacked along the vertical direction of the lead-acid battery to constitute an element. Further, in the horizontal lead-acid battery, the electrode plates and the separators may be stacked along the horizontal direction of the lead-acid battery to constitute the element. In a horizontal lead-acid battery including an element in which electrode plates and separators are stacked along the vertical direction of the lead-acid battery, the bottom side of the element refers to a region from the predetermined height h of the element to the bottom surface of the element. In such a horizontal lead-acid battery, the top side of the element is a region except for the bottom side of the element and is a region from the predetermined height h of the element to the top surface of the element. In a horizontal lead-acid battery including an element in which electrode plates and separators are stacked along the horizontal direction of the lead-acid battery, the bottom and top sides of the element are determined similarly to the case of the vertical lead-acid battery. In the vertical lead-acid battery and the horizontal lead-acid battery including the element in which the electrode plates and the separators are stacked along the horizontal direction of the lead-acid battery, the distance from the lowermost end to the uppermost end of the separator constituting the element corresponds to a height H of the electrode plates. In the horizontal lead-acid battery including the element in which the electrode plates and the separators are stacked along the vertical direction of the lead-acid battery, the distance (i.e., the thickness of the element in the stacking direction) from the bottom surface to the top surface of the element corresponds to the height H of the element. The predetermined height h corresponds to the height of the upper end of the surrounding member.

In the vertical lead-acid battery and the horizontal lead-acid battery including the element in which the electrode plates and the separators are stacked along the horizontal direction of the lead-acid battery, the side facing the upper side of the element is defined as the upper side of the separator, and the side facing the lower side of the element is defined as the lower side of the separator when the lead-acid battery is in use. In the horizontal lead-acid battery including the element in which the electrode plates and the separators are stacked along the vertical direction of the lead-acid battery, the side facing the upper side of the electrode plate (i.e., the lug side) is defined as the upper side of the separator, and the side facing the lower side of the electrode plate is defined as the lower side of the separator.

The lead-acid battery usually includes a container housing the element and the electrolyte solution. The container usually has a bottom for supporting the element and a sidewall formed at the peripheral edge of the bottom. When the container has a plurality of cell chambers, the container includes a partition separating adjacent cell chambers. Usually, one element is housed in one cell chamber to constitute one cell. The lead-acid battery may include one element or may include a plurality of elements.

In a lead-acid battery (vertical lead-acid battery, etc.) with its lid located above the lead-acid battery, the top-side peripheral surface of the element generally faces at least one of the sidewall and the partition of the container. A clearance (hereinafter referred to as a second clearance) is formed between the top-side peripheral surface of the element and a member (i.e., at least one of the sidewall and the partition of the container) facing the peripheral surface. In a lead-acid battery (horizontal lead-acid battery, etc.) with its lid located on the side of the lead-acid battery, the top-side peripheral surface of the element generally faces at least one of the sidewall and the partition of the container, the lid of the battery, and the bottom of the container. In this case, the clearance formed between these facing members and the top-side peripheral surface of the element is referred to as the second clearance. The width of the first clearance is smaller than the width of the second clearance. The width of the first clearance is a distance (or interval) between the bottom-side peripheral surface of the element and the surrounding member facing the peripheral surface. The width of the second clearance is a distance (or interval) between the top-side peripheral surface of the element and the member facing the peripheral surface. The member facing the peripheral surface of the element (i.e., the surrounding member, the lid of the lead-acid battery, the sidewall or partition of the container, or the bottom of the container) may be referred to as a member around the element. That the width of the first clearance is smaller than the width of the second clearance means that the average value of the widths of the first clearance is smaller than the average value of the widths of the second clearance. The average value of the widths of each clearance is a value obtained by measuring and averaging the widths of the clearance at any three locations for each of four peripheral surfaces of the element (12 locations in a total of the four peripheral surfaces). Note that the width of the clearance is measured at any three locations on the peripheral surface where the main surface of the electrode plate or the main surface of the separator faces the member around the element. With respect to the peripheral surface where the end face of the electrode plate faces the member around the element, the width of the clearance shall be measured at any nine locations, and the measured values at the remaining three locations excluding the three locations where the measured values are large and the three locations where the measured values are small are averaged. When the surrounding member has at least one of a notch and a rib protruding toward the peripheral surface of the element, the width of the clearance is measured in a location where the notch and the rib are not present. In the horizontal lead-acid battery, when the lug of the electrode plate faces the member around the element, the width of the clearance is measured at a location except for the lug.

In the lead-acid battery, in general, the specific gravity of the electrolyte solution present in the container is increased by the charging reaction of the element during charge, and the electrolyte solution having a high specific gravity tends to be lowered to the bottom side of the element. On the other hand, during discharge, the specific gravity of the electrolyte solution present in the container decreases. The electrolyte solution having a low specific gravity can rise to the top side of the element in the container. However, the rise of the electrolyte solution is not sufficient to eliminate the difference in the specific gravity of the electrolyte solution between the top side and the bottom side of the element in the container. Therefore, in the conventional lead-acid battery, the stratification of the electrolyte solution proceeds as the charge and discharge are repeated.

On the other hand, in the lead-acid battery according to one aspect of the present invention, the first clearance having a small distance to the peripheral surface of the element is provided on the bottom side of the element by the surrounding member that does not permeate the electrolyte solution, and S1/S0 is set to 0.90 or more. In this case, the lowering of the electrolyte solution having a large specific gravity to the bottom side of the element is prevented. In addition, since the amount of the electrolyte solution around the element on the bottom side is smaller than that on the top side, the specific gravity of the electrolyte solution on the bottom side tends to be small during discharge, and agitation due to the rise of the electrolyte solution having a small specific gravity is promoted. In particular, in the lead-acid battery that performs idling stop (IS) control, deep discharge is performed, so that a large agitation promoting action can be obtained by providing the first clearance as described above. This makes it easy to improve the durability of the lead-acid battery.

By forming the first clearance such that S1/S0 is 0.90 or more (S1/S0 ≥ 0.90), the lowering of the electrolyte solution having a large specific gravity to the bottom side of the element is remarkably prevented during charge, and the agitation due to the rise of the electrolyte solution having a small specific gravity is promoted during discharge. Thus, the difference in the specific gravity of the electrolyte solution between the top side and the bottom side of the element is reduced. As a result, the electrolyte solution having a high specific gravity hardly stays on the bottom side of the element, and the stratification is prevented. The cycle life of the lead-acid battery is improved by preventing the stratification. On the other hand, when the amount of the electrolyte solution existing around the element decreases, the capacity tends to decrease. Therefore, it has not been assumed to increase S1/S0 as described above, nor has it been considered. Moreover, it has not been known that the stratification is effectively prevented by increasing S1/S0.

S1/S0 only needs to be 0.90 or more, preferably 0.92 or more, more preferably 0.94 or more, and may be 0.95 or more. S1/S0 is usually less than 1, may be 0.99 or less or 0.98 or less, and may be 0.94 or less or 0.92 or less. These lower limit values and upper limit values can be combined arbitrarily.

S1/S0 may be 0.90 (or 0.92) or more and less than 1, 0.90 (or 0.92) to 0.99, 0.90 (or 0.92) to 0.98, 0.94 (or 0.95) to 0.98, 0.90 (or 0.92) to 0.94, 0.90 to 0.92, 0.94 (or 0.95) or more and less than 1, or 0.94 (or 0.95) to 0.99, or the like.

In the case of a single cell, S1/S0 only needs to be in the above range in this cell (or container). When the container includes a plurality of cell chambers, the corresponding effect can be obtained by setting S1/S0 in the above range for at least one cell chamber. Further, from the viewpoint of obtaining the above effect in the whole of the plurality of cells, the average value of S1/S0 obtained for the plurality of cells may be in the above range. In each cell, when S 1/S0 is set to be in the above range, it is more advantageous because the effect of preventing the stratification in the whole container can be obtained.

Note that the smaller the width of the first clearance, the larger the effect of preventing the stratification, so that the width of the first clearance may be as close as possible to zero. However, the sizes of the element to be manufactured vary, and the first clearance is usually designed in consideration of the variation, so that the width of the first clearance is larger than zero.

S0 and S1 are each obtained from a cross-sectional sample parallel to the horizontal direction of the lead-acid battery. The cross-sectional sample is prepared by the following procedure. First, a welded portion between the container and the lid (more specifically, a boundary surface between the container and the lid) is cut, and the electrolyte solution inside the container is removed by washing with water. Next, the element is dried while being heated at a temperature of 50°C or more and 100°C or less under a reduced pressure of atmospheric pressure or less. After the element is cooled to room temperature (e.g., a temperature of 20°C or more and 35°C or less), an epoxy resin is poured into the container and cured together with the element. Note that the temperature of the element when the epoxy resin is poured is 20°C to 35°C. After the epoxy resin is cured, the epoxy resin is cut at an arbitrary height, and the cross section is polished to obtain a cross-sectional sample. S0 is an average value of areas surrounded by projected images in the vertical direction of the surrounding member obtained from four cross-sectional samples at arbitrary heights on the bottom side of the element. S1 is an average value of projected areas of the element in the vertical direction obtained from four cross-sectional samples at arbitrary heights on the bottom side of the element. When the separator packages the positive electrode or the negative electrode, the projected area of the separator in the vertical direction and the region surrounded by the separator in the cross-sectional sample is also included in S1. S1 is determined for the element in a lead-acid battery in a fully charged state.

S0 and S1 are determined by the following procedure. First, a digital image of the cross-sectional sample is taken. In the digital image, a threshold is set such that a region surrounded by the surrounding member and a region outside the region are distinguished from each other, and binarization processing is performed. The area of the region surrounded by the surrounding member is obtained from the binarized image. For each of the four cross-sectional samples, the area of the region surrounded by the surrounding member is determined and averaged to obtain S0. In the digital image of the cross-sectional sample, a threshold is set such that the element and the region outside the contour of the element are distinguished from each other, and binarization processing is performed. The area of the element (i.e., the area of the region surrounded by the contour of the element) is obtained from the binarized image. For each of the four cross-sectional samples, the area of the element is determined and averaged to obtain S1. For the binarization processing, ImageJ available from NIH is used as image processing software.

The peripheral surface on the bottom or top side of the element refers to the surface of the periphery (i.e., side portion) on the bottom or top side of the element. In the element, generally, the separator protrudes outward from the electrode plate, or the size or lamination of the electrode plate varies, so that the side of the element has irregularities. The uneven surface is also included in the peripheral surface of the element. The peripheral surface on the bottom side or top side of the element can also be referred to as the outer surface of a solid formed when the contour of the element is continued in the height direction in a cross-sectional sample parallel to the horizontal direction of the lead-acid battery at a certain height on the bottom side or top side of the element. The four side portions of the element are surrounded by the members around the element. The surface of the side of the element facing one of the members around the element is defined as one peripheral surface of the element. That is, the element has four peripheral surfaces facing the members around the element. That the element faces the members around the element also includes a case where the element faces the members around the element with the spacer interposed between the element and the members around the element.

In the present specification, the fully charged state of the lead-acid battery is defined by the definition of Japanese Industrial Standards (JIS) D 5301: 2006. More specifically, the following state is defined as a fully charged state: the lead-acid battery is charged in a water bath at 25°C ± 2°C at a current (A) 0.2 times as large as a numerical value described as a rated capacity (Ah) until a terminal voltage during charge measured every 15 minutes or an electrolyte solution density subjected to temperature correction to 20°C exhibits a constant value at three significant digits continuously three times. In the case of a valve regulated lead-acid battery, the fully charged state is a state where the lead-acid battery is subjected to constant current constant voltage charge of 2.23 V/cell at a current (A) 0.2 times as large as the numerical value described as the rated capacity (Ah) in an air tank of 25°C ± 2°C, and the charge is completed when the charge current (A) during constant voltage charge becomes 0.005 times as large as the numerical value described as the rated capacity (Ah). Note that the numerical value described as the rated capacity is a numerical value in which the unit is Ah. The unit of the current set based on the numerical value indicated as the rated capacity is A.

The lead-acid battery in the fully charged state refers to a battery obtained by fully charging a chemically converted lead-acid battery. The full charge of the lead-acid battery may be performed immediately after chemical conversion so long as being performed after chemical conversion or may be performed after the lapse of time from chemical conversion (e.g., a lead-acid battery in use (preferably at the initial stage of use) after chemical conversion may be fully charged). The battery at the initial stage of use refers to a battery that has not been used for a long time and has hardly deteriorated.

In the present specification, "not permeate the electrolyte solution" means that the surrounding member does not have pores through which the electrolyte solution is supplied at least from the upper side of the container to the bottom side of the element during charge. Even in a case where the surrounding member has pores permeable to the electrolyte solution, when the opening of the pores does not face the peripheral surface of the element, the supply of the electrolyte solution from the upper side of the container to the bottom side of the element is prevented. Therefore, the case of using the surrounding member having such pores is not excluded, but preferably, the surrounding member does not have pores that permeate the electrolyte solution (preferably, liquid). However, the surrounding member may permeate gas such as air, for example.

Therefore, the surrounding member does not include a nonwoven fabric, a porous spacer having pores permeable to the electrolyte solution, and the like. Even when the element is covered with the nonwoven fabric or the porous spacer is disposed around the element, it is difficult to sufficiently prevent the stratification. This is because the nonwoven fabric, the porous spacer, or the like cannot prevent the lowering of the electrolyte solution having a large specific gravity because the electrolyte solution is easily supplied to the bottom-side portion of the element through the electrolyte solution.

The surrounding member may be a part of the sidewall of the container, may be a part of a partition of the container, or may be both of these. In these cases, the container only needs to be formed such that at least one of the sidewall and the partition functions as the surrounding member. For example, at least one of the sidewall and the partition only needs to be formed such that a portion of the sidewall and the partition facing the bottom-side peripheral surface of the element protrudes toward the peripheral surface of the element. More specifically, a portion of at least one of the sidewall and the partition facing the bottom-side peripheral surface of the element may be formed thicker than a portion facing the top side. At least one of a stepped portion and a curved portion may be formed in the vicinity of a portion between the bottom side and the top side of the element such that a portion of the sidewall facing the bottom-side peripheral surface of the element protrudes toward the peripheral surface of the element. In these cases, the surrounding member is not required separately, and the manufacturing cost of the lead-acid battery can be reduced.

The surrounding member may be, for example, a spacer that is disposed between at least one of the sidewall and the partition of the container and the element and does not permeate the electrolyte solution. Such a spacer may be, for example, attached to (or wound around) the peripheral surface of the element, may be attached to at least one of the sidewall and the partition, or may be inserted between the bottom side of the element and at least one of the sidewall and the partition. The spacer that does not permeate the electrolyte solution hinders the lowering of the electrolyte solution having a large specific gravity, so that the difference in the specific gravity of the electrolyte solution between the top side and the bottom side of the element is less likely to occur.

The surrounding member may be a combination of:
(a1) at least one of a part of the sidewall of the container and a part of the partition; and
(b1) a spacer that is disposed between at least one of the sidewall and the partition and the element and is not permeated by the electrolyte solution. In this case, the variety of configuration of the surrounding member increases, and the degree of freedom in the design of the lead-acid battery increases.

In a lead-acid battery with its lid located on the side of the lead-acid battery, a part of the bottom of the container may constitute the surrounding member in addition to a part of at least one of the sidewall and the partition of the container. In such a lead-acid battery, the lid of the lead-acid battery faces the peripheral surface of the element. However, since the distance between the lid and the element is relatively large, at least on the bottom side of the element, a spacer that is not permeated by the electrolyte solution is disposed between the lid and the element. Therefore, this spacer also constitutes the surrounding member. That is, in such a case, the surrounding member is a combination of (a2) and (b2) below:
(a2) at least a part of at least one of the sidewall and the partition of the container and a part of the bottom of the container; and
(b2) a spacer that is disposed between the lid of the lead-acid battery and the element and is not permeated by the electrolyte solution.

In the lead-acid battery with its lid located on the side of the lead-acid battery, the surrounding member may be a spacer that is not permeated by the electrolyte solution. In this case, the spacer is disposed between at least one of the sidewall and the partition of the container, the lid of the lead-acid battery, and the bottom of the container and the element.

In the lead-acid battery with its lid located on the side of the lead-acid battery, the surrounding member may be a combination of (a3) and (b3) below:
(a3) at least a part of at least one of the sidewall, partition, and bottom of the container; and
(b3) a spacer that is not permeated by the electrolyte solution and disposed between at least one of the sidewall, partition, and bottom of the container and the element, and between the lid of the lead-acid battery and the element.

Although the shape of the spacer is not particularly limited, the spacer preferably has a sheet shape, a plate shape, an L-shaped cross section in the horizontal direction, a cylindrical shape (square cylindrical shape, etc.) a shape obtained by dividing the same (e.g., a combination of an L-shaped cross section in the horizontal direction and a U-shaped and a plate-shaped cross section in the horizontal direction.), and some other shape from the viewpoint of easily disposing the spacer stably in the cell chamber. Further, the material of the spacer is not particularly limited so long as not penetrating the electrolyte solution. The spacer can be formed of, for example, resin or glass. The spacer may be formed of an olefin resin (polyethylene, polypropylene, etc.), polyvinyl chloride, acrylic resin, polystyrene resin, or the like from the viewpoint of being light weight and easily ensuring resistance to the electrolyte solution. In addition, for example, a material having a specific gravity lower than that of the electrolyte solution may be used, or a hollow structure may be used, or both of these may be adopted. In these cases, the spacer is easily moved by buoyancy, and it is thus preferable to fix the spacer to the container. The fixing method is not particularly limited, and examples thereof include fixing by adhesion, fixing by fitting irregularities, and fixing using both of these.

When the height of the element is H, the first clearance may be formed up to a position 0.5H or less from the bottom surface of the element. In this case, the electrolyte solution can be held abundantly in the container or in the upper part of the cell chamber, whereby the battery reaction can be caused to satisfactorily proceed while the stratification is prevented, and the high capacity can be easily ensured.

The first clearance may be formed up to a position of 0.3H or more or 0.4H or more from the bottom surface of the element. In these cases, the effect of preventing the stratification can be further enhanced.

The first clearance is preferably formed up to a position between a position 0.3H and a position 0.5H, and more preferably up to a position between a position 0.4H and a position 0.5H, from the bottom surface of the element. In these cases, the effect of preventing the stratification can be further enhanced. In addition, the electrolyte solution can be abundantly held in the container or in the upper portion of the cell chamber, and hence a high capacity can be ensured.

In the vertical lead-acid battery and the horizontal lead-acid battery including the element in which the electrode plates and the separators are stacked along the horizontal direction of the lead-acid battery, the height H of the element is, as described above, the distance from the lowermost end to the uppermost end of the separator constituting the element. In the horizontal lead-acid battery including an element in which electrode plates and separators are stacked along the vertical direction of the lead-acid battery, the height H of the element is the thickness in the stacking direction of the element. The height H of the element is determined by measuring and averaging the heights at any three locations of the element taken out from the lead-acid battery. At this time, the height H of the element is measured in a state where the separator is spread flat (horizontally).

The width of the first clearance only needs to be smaller than the width of the second clearance on at least one of the four peripheral surfaces of the element and may be smaller than the width of the second clearance on the two, three, or four peripheral surfaces. From the viewpoint of ensuring a higher effect of preventing the stratification, the width of the first clearance is preferably smaller than the width of the second clearance on two or more (more preferably three or more) peripheral surfaces among the four peripheral surfaces, and particularly preferably smaller than the width of the second clearance on all the four peripheral surfaces.

Hereinafter, embodiments of the lead-acid battery according to the present invention will be described for each of the main constituent elements, but the present invention is not limited to the following embodiment.

### (Element)

The element includes a positive electrode plate, a negative electrode plate, and a separator interposed between the positive electrode plate and the negative electrode plate.

### (Positive electrode plate)

The positive electrode plate of a lead-acid battery can be classified into a paste type, a clad type, and the like. Either a paste-type or a clad-type positive electrode plate may be used. The paste-type positive electrode plate includes a positive current collector and a positive electrode material. The positive electrode material is held by the positive current collector. In the paste-type positive electrode plate, the positive electrode material is obtained by removing the positive current collector from the positive electrode plate. The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported. The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a material obtained by removing the tube, the spine, the current collector, and the joint. In the clad-type positive electrode plate, the spine and the current collector may be collectively referred to as a positive current collector.

A member such as a mat or a pasting paper may be stuck to the positive electrode plate. Such a member (sticking member) is used integrally with the positive electrode plate and is thus assumed to be included in the positive electrode plate. When the positive electrode plate includes such a member, the positive electrode material is obtained by removing the positive current collector and the sticking member from the positive electrode plate in the paste-type positive electrode plate.

As a lead alloy used for the positive current collector, a Pb-Sb alloy, a Pb-Ca alloy, or a Pb-Ca-Sn alloy are preferred in terms of corrosion resistance and mechanical strength. The positive current collector may include a surface layer. Lead alloy layers (surface layers) having different compositions may be provided, and a plurality of alloy layers may be provided. The surface layer and the inner layer of the positive current collector may have different compositions. The surface layer may be formed in a part of the positive current collector. The surface layer may be formed only on the grid portion, only on the lug portion, or only on the frame rib portion of the positive current collector.

The positive electrode material contains a positive active material (lead dioxide or lead sulfate) that exhibits a capacity through a redox reaction. The positive electrode material may optionally contain an additive.

A non-chemically converted paste-type positive electrode plate is obtained by filling a positive current collector with a positive electrode paste, and curing and drying the paste. The positive electrode paste is prepared by kneading lead powder, an additive, water, and sulfuric acid. A non-chemically converted clad-type positive electrode plate is formed by filling a porous tube, into which a spine connected by a current collector is inserted with lead powder or a slurry-like lead powder, and joining a plurality of tubes with a joint. Thereafter, the positive electrode plate is obtained by chemically converting the non-chemically converted positive electrode plates. The chemical conversion can be performed by charging the element in a state where the element including the non-chemically converted positive electrode plate immersed in the electrolyte solution containing sulfuric acid in the container of the lead-acid battery. However, the chemical conversion may be performed before the lead-acid battery or the element is assembled.

### (Negative electrode plate)

The negative electrode plate of the lead-acid battery is composed of a current collector and a negative electrode material. The negative electrode material is obtained by removing the negative current collector from the negative electrode plate. Note that a member such as a mat or a pasting paper may be stuck to the negative electrode plate. Such a member (sticking member) is used integrally with the negative electrode plate and is thus assumed to be included in the negative electrode plate. When the negative electrode plate includes such a member, the negative electrode material excludes the negative current collector and the sticking member.

The negative current collector only needs to be formed according to the case of the positive current collector and can be formed, for example, by casting lead or a lead alloy or by processing a lead or a lead alloy sheet. It is preferable to use a grid-shaped current collector (negative electrode grid) as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug of the negative current collector. The surface layer of the lug may contain Sn or an Sn alloy.

The negative electrode material contains a negative active material (lead or lead sulfate), which exhibits a capacity through a redox reaction, as an essential component and can contain an additive (organic expanders, carbonaceous materials, barium sulfate, etc.). The negative active material in the state of charge is spongy lead, but the non-chemically converted negative electrode plate is usually prepared using lead powder.

As the organic expander, at least one of lignins and a synthetic organic expander may be used. Examples of the lignins include lignin and lignin derivatives such as lignin sulfonic acid, or salts thereof (such as alkali metal salts (sodium salts and the like)). The synthetic organic expander is an organic polymer containing a sulfur element. Examples of the synthetic organic expander include, but are not limited to, a condensate obtained using an aldehyde compound (aldehyde or its condensate such as formaldehyde), which is a compound having a sulfur-containing group and an aromatic ring, for example.

The content of the organic expander contained in the negative electrode material is, for example, preferably 0.01% by mass or more and more preferably 0.05% by mass or more. On the other hand, the content is preferably 1.0% by mass or less and more preferably 0.5% by mass or less. These lower limit values and upper limit values can be combined arbitrarily. Here, the content of the organic expander contained in the negative electrode material is a content in the negative electrode material collected from a chemically converted lead-acid battery in the fully charged state by a method to be described later.

The content of the organic expander contained in the negative electrode material may be 0.01% by mass or more (or 0.05% by mass or more) and 1.0% by mass or less, or 0.01% by mass or more (or 0.05% by mass or more) and 0.5% by mass or less.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more and may be 0.10% by mass or more. The content of the carbonaceous material is preferably 5% by mass or less and may be 3% by mass or less. These lower limit values and upper limit values can be combined arbitrarily.

The content of the carbonaceous material in the negative electrode material may be 0.05% by mass or more (or 0.10% by mass or more) and 5% by mass or less, or 0.05% by mass or more (or 0.10% by mass or more) and 3% by mass or less.

The content of barium sulfate in the negative electrode material is, for example, preferably 0.05% by mass or more and may be 0.1% by mass or more. The content of barium sulfate in the negative electrode material is preferably 3% by mass or less and may be 2% by mass or less. These lower limit values and upper limit values can be combined arbitrarily.

The content of barium sulfate in the negative electrode material may be 0.05% by mass or more (or 0.1% by mass or more) and 3% by mass or less, or 0.05% by mass or more (or 0.1% by mass or more) and 2% by mass or less.

Hereinafter, a method for quantifying the amounts of the organic expander, the carbonaceous material, and the barium sulfate contained in the negative electrode material will be described. Prior to quantitative analysis, a lead-acid battery in a fully charged state is disassembled to obtain a negative electrode plate to be analyzed. The obtained negative electrode plate is washed with water to remove sulfuric acid from the negative electrode plate. The washing with water is performed until it is confirmed that the color of the pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter referred to as sample A). Sample A is ground as necessary and subjected to analysis.

### <<Quantitative determination of organic expander>>

Crushed sample A is immersed in a 1 mol/L NaOH aqueous solution to extract the organic expander. An insoluble component is removed from a NaOH aqueous solution containing the extracted organic expander by filtration. The obtained filtrate (hereinafter also referred to as filtrate B) is desalted, concentrated, and dried to obtain the powder of the organic expander (hereinafter also referred to as sample C). The desalination can be performed by using a desalination column, by causing filtrate B to pass through an ion-exchange membrane, or by placing filtrate B in a dialysis tube and immersing filtrate B in distilled water.

The organic expander is specified by combining information obtained from an infrared spectral spectrum of sample C, an ultraviolet-visible absorption spectrum of a solution obtained by dissolving sample C in distilled water or the like, a nuclear magnetic resonance (NMR) spectrum of a solution obtained by dissolving sample C in a solvent such as heavy water, a pyrolysis gas chromatography-mass spectrometry (GC-MS) capable of obtaining information on individual compounds constituting the substance, or the like.

The ultraviolet-visible absorption spectrum of the filtrate B is measured. The content of the organic expander in the negative electrode material is determined quantitatively using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### <<Quantitative determination of carbonaceous material and barium sulfate>>

50 ml of nitric acid having a concentration of 20% by mass is added to 10 g of crushed sample A, and the mixture is heated for about 20 minutes to dissolve a lead component as lead nitrate. Next, a solution containing the obtained lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The obtained sample is a mixed sample of carbonaceous material and barium sulfate (hereinafter also referred to as sample D). A mass (Mₘ) of the sample D is measured by subtracting the mass of the membrane filter from the total mass of dried sample D and the membrane filter. Thereafter, dried sample D is placed in a crucible together with a membrane filter and is burned and incinerated at 700°C or higher. The residue remaining is barium oxide. The mass (M_{B}) of barium sulfate is determined by converting the mass of barium oxide to the mass of barium sulfate. The mass of the carbonaceous material is calculated by subtracting the mass M_{B} from the mass Mₘ.

The negative electrode plate can be formed in such a manner that a negative current collector is filled with a negative electrode paste, which is then cured and dried to prepare a non-chemically converted negative electrode plate, and thereafter, the non-chemically converted negative electrode plate is chemically converted. The negative electrode paste is prepared by adding water and sulfuric acid to lead powder and various additives and kneading the mixture. In the curing process, it is preferable to cure the non-chemically converted negative electrode plate at room temperature or at a higher temperature and high humidity.

The chemical conversion can be performed by charging the element in a state where the element including the non-chemically converted negative electrode plate is immersed in the electrolyte solution that contains sulfuric acid in the cell of the lead-acid battery. However, the chemical conversion may be performed before the lead-acid battery or the element is assembled. The chemical conversion produces spongy lead.

### (Separator)

A nonwoven fabric, a microporous film, or the like is used as the separator disposed between the negative electrode plate and the positive electrode plate. The thickness of separators interposed between the negative electrode plate and the positive electrode plate may be selected in accordance with the distance between the electrodes. The number of separators only needs to be selected in accordance with the number of poles.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, etc.), etc.), pulp fibers, and the like. Among them, glass fibers are preferable. The nonwoven fabric may contain components in addition to the fibers, such as acid-resistant inorganic powder, and a polymer as a binder.

On the other hand, the microporous film is a porous sheet mainly made of components except for fiber components and is obtained by, for example, extrusion molding a composition containing, for example, a pore-forming additive (at least one of polymer powder and oil) into a sheet shape and then removing the pore-forming additive to form pores. The microporous film is preferably made of a material having acid resistance and is preferably composed mainly of a polymer component. As the polymer material, a polyolefin (polyethylene, polypropylene, etc.) is preferred.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other. The separator may have a sheet shape or may be formed in a bag shape. When the bag-shaped separator is used, the bag-shaped separator may house the positive electrode plate or may house the negative electrode plate.

When the sheet-like separator is used, one sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. The sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portion is along the horizontal direction of the lead-acid battery (e.g., such that the bent portion may be parallel to the horizontal direction), and the separator may be disposed such that the folded portion is along the vertical direction (e.g., such that the bent portion is parallel to the vertical direction). In the separator folded in the bellows shape, recesses are alternately formed on both main surface sides of the separator. Since the lugs are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates).

### (Electrolyte solution)

The electrolyte solution is an aqueous solution containing sulfuric acid and may be gelled as necessary. The electrolyte solution may contain cations, such as metal cations (at least one selected from sodium ion, lithium ion, magnesium ion, and aluminum ion) and anions (e.g., anions other than sulfate anions (phosphate ions, etc.)) as necessary.

The specific gravity of the electrolyte solution in the lead-acid battery in the fully charged state at 20°C is, for example, 1.20 or more and may be 1.25 or more. The specific gravity of the electrolyte solution in the lead-acid battery in the fully charged state at 20°C may be, for example, 1.35 or less and 1.32 or less.

The specific gravity of the electrolyte solution in the lead-acid battery in the fully charged state at 20°C is, for example, 1.20 to 1.35 and preferably 1.25 to 1.32.

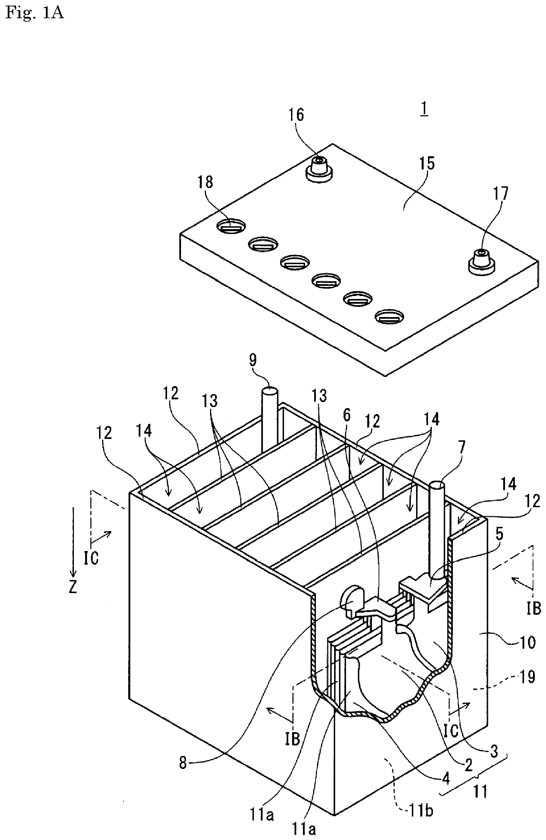

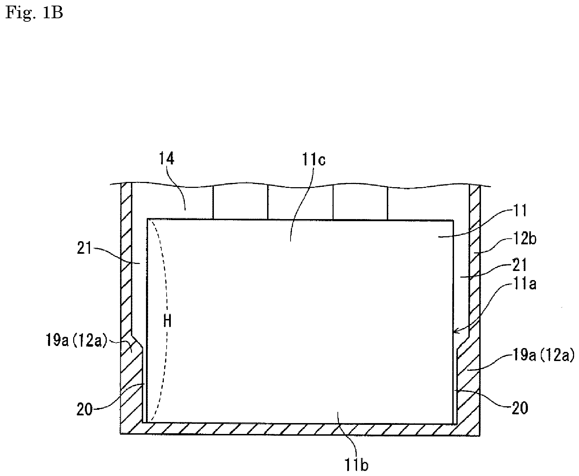

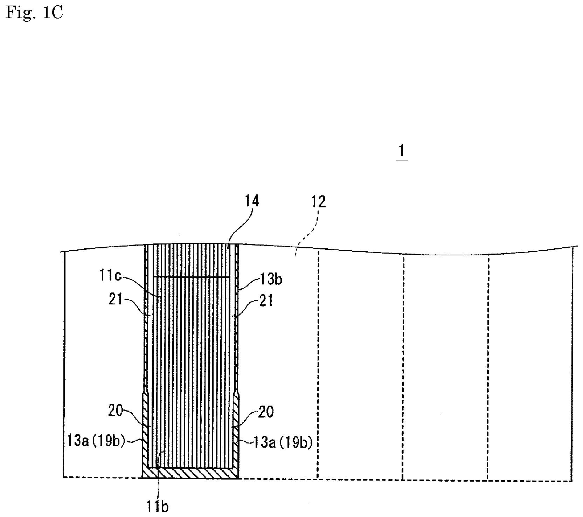

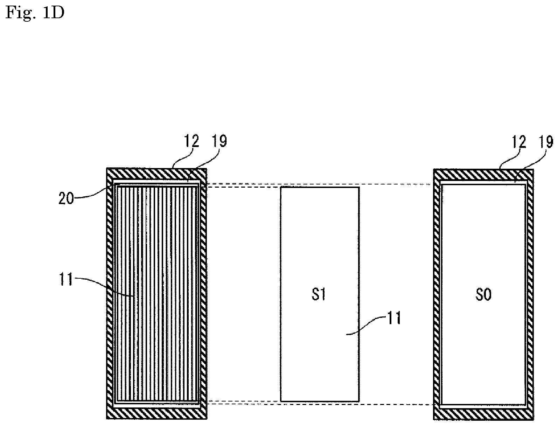

Fig. 1A is a perspective view schematically illustrating the internal structure of the lead-acid battery according to the present embodiment of the present invention. Fig. 1B is a schematic cross-sectional view of the lead-acid battery in Fig. 1A when the lead-acid battery is cut along a line IB-IB, and the inside of the cell chamber is viewed in an arrow direction Fig. 1C is a schematic cross-sectional view of the lead-acid battery in Fig. 1A when the lead-acid battery is cut along a line IC-IC, and the inside of the cell chamber is viewed in the arrow direction. In Figs. 1B and 1C, the negative strap portion, the negative pole, the positive strap portion, and the positive pole, which will be described later, are omitted for convenience of explanation. Fig. 1D is a schematic view for explaining a schematic cross section, an area S0, and a projected area S1 of one cell of the lead-acid battery in Fig. 1A when the inside of the cell chamber is viewed in a vertical direction Z from a predetermined position in a top-side portion of the cell toward the bottom.

As illustrated in Fig. 1A, a lead-acid battery 1 includes a container 10 that houses an element 11 and an electrolyte solution (not shown). The container 10 includes a sidewall 12. The inside of the container 10 is partitioned by partitions 13 into a plurality of cell chambers 14. Each cell chamber 14 contains one element 11. The opening of the container 10 is closed with a lid 15 having a negative electrode terminal 16 and a positive electrode terminal 17. The lid 15 is provided with a vent plug 18 for each cell chamber 14. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and positive electrode plates 3 with a separator 4 interposed therebetween. Here, the bag-shaped separator 4 housing the negative electrode plate 2 is shown, but the form of the separator 4 is not particularly limited. In the cell chamber 14 located at one end of the container 10, a negative strap portion 6 for connecting a plurality of negative electrode plates 2 in parallel is connected to an inter-cell connector 8, and a positive strap portion 5 for connecting the plurality of positive electrode plates 3 in parallel is connected to a positive pole 7. The positive pole 7 is connected to the positive electrode terminal 17 outside the lid 15. In the cell chamber 14 located at the other end part of the container 10, the negative pole 9 is connected to the negative strap portion 6, and the inter-cell connector 8 is connected to the positive strap portion 5. The negative pole 9 is connected to the negative electrode terminal 16 outside the lid 15. Each inter-cell connector 8 passes through a through-hole provided in the partition 13 to connect the elements 11 of the adjacent cell chambers 14 in series.

Although Figs 1A to 1D illustrate an example of a flooded-type battery (vented battery), the lead-acid battery does not exclude a valve regulated battery (VRLA type).

Hereinafter, even in different embodiments, the same components are denoted by the same reference numerals, and the description thereof will not be repeated.

The following embodiments are examples of a vertical lead-acid battery.

### (First embodiment)

In the lead-acid battery 1 according to the present embodiment, a surrounding member 19, which faces a peripheral surface 11a on the bottom 11b side of the element 11 and is not permeated by the electrolyte solution, is disposed. A first clearance 20 is formed between a peripheral surface 11a on a bottom 11b side of the element 11 and a surrounding member 19 (cf. Fig. 1B). The ratio (S1/S0) of a projected area S1 of the element 11 in the vertical direction to an area S0 surrounded by the projected image of the surrounding member 19 in the vertical direction (cf. Fig. 1D) is 0.90 or more. As described above, S1 and S0 are obtained as average values of values obtained for the four cross-sectional samples. In Fig. 1D, for convenience, the projected area of the element 11 in the vertical direction and the area surrounded by the projected image of the surrounding member 19 in the vertical direction in one cross-sectional sample are illustrated as S1 and S0, respectively.

In the lead-acid battery 1 according to the present embodiment, as illustrated in Fig. 1B, a bottom-side portion 12a of the sidewall of the cell chamber 14 also serves as the surrounding member 19a. That is, the bottom-side portion 12a of the sidewall of the cell chamber 14 is formed thicker than the other portion (a portion except for the bottom-side portion of the sidewall 12) 12b, and the bottom-side portion 12a of the sidewall (surrounding member 19a) protrudes toward the peripheral surface 11a of the element 11.

In the lead-acid battery 1, as illustrated in Fig. 1C, the partition 13 of the cell chamber 14 also serves as a surrounding member 19b. That is, a bottom-side portion 13a of the partition 13 of the cell chamber 14 is formed thicker than the other portion (a portion except for the bottom-side portion of the partition 13) 13b, and the bottom-side portion 13b of the partition 13 (the surrounding member 19b) protrudes toward the peripheral surface 11a of the element 11. In the lead-acid battery 1 according to the present embodiment, no additional surrounding member is required except for the bottom-side portion 12a of the sidewall and the bottom-side portion 13a of the partition 13.

As illustrated in Figs. 1B and 1C, where the height of the element 11 is H, the thickly formed portions of the sidewall and the partition 13 (the surrounding members 19a, 19b) are formed up to a position approximately 0.5H or less from the bottom surface of the element 11. Thus, the first clearance 20 is formed up to the position approximately 0.5H or less from the bottom surface of the element 11. More preferably, the thickly formed bottom-side portions 12a, 13a of the sidewall and the partition 13 (the surrounding members 19a, 19b) are formed up to a position between a position 0.4H and a position 0.5H from the bottom surface of the element 11.

As illustrated in Figs. 1B and 1C, the width of the first clearance 20 is smaller than the width of the second clearance 21 formed on a top 11c side of the element 11.

### (Second Embodiment)

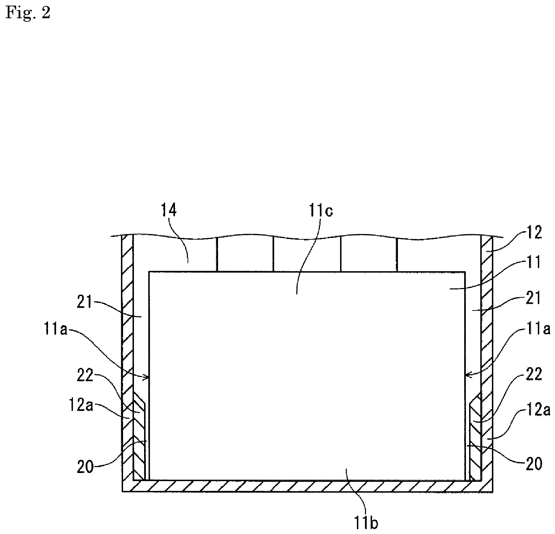

A second embodiment will be described below with reference to Fig. 2. Fig. 2 is a schematic cross-sectional view of a lead-acid battery according to another embodiment of the present invention when the inside of the cell chamber is viewed in the stacking direction of the element in accordance with the case of Fig. 1B (i.e., when the lead-acid battery is cut along a lone IB-IB in Fig. 1A and viewed in the arrow direction). In the lead-acid battery 1 according to the present embodiment, the surrounding member is a spacer 22 that is not permeated by the electrolyte solution and disposed between at least one of the sidewall 12 and the partition 13 provided in the container and the element 11. In Fig. 2, an example is illustrated in which the surrounding member is the spacer 22 that is disposed between the bottom-side portion 12a of the sidewall 12 provided in the container and the element 11 and is not permeated by the electrolyte solution. As illustrated in Fig. 2, the spacer 22 is disposed to surround the peripheral surface 11a on the bottom 11b side of the element 11. Thus, the first clearance 20 having a width smaller than the width of the second clearance 21 is formed between the peripheral surface 11a of the element 11 and the spacer 22.

### (Third Embodiment)

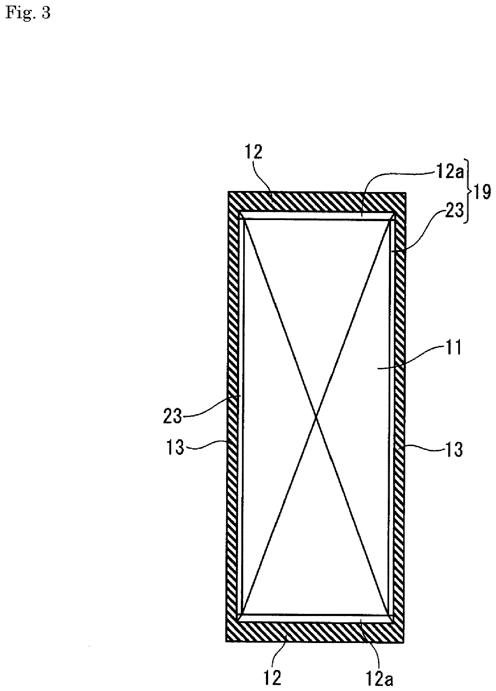

The third embodiment will be described below with reference to Fig. 3. Fig. 3 is a schematic view of one cell of a lead-acid battery according to still another embodiment of the present invention when the inside of the cell chamber is viewed from a predetermined position in a top-side portion of the cell toward the bottom in the vertical direction Z. In Fig. 3, the internal structure of the element 11 is omitted. A spacer 19 is made up of bottom-side portions 12a of a pair of sidewalls 12 facing each other in the cells, and a pair of spacers 23 disposed between a pair of partitions 13 facing each other and the element 11.

Fig. 3 illustrates an example in which the surrounding member 19 is a combination of the sidewall 12 provided in the container and the spacer 23 that does not transmit the electrolyte solution. However, the third embodiment is not limited to this combination, and the surrounding member only needs to be constituted by a combination of at least one of the sidewall and the partition provided in the container and the spacer that is not permeated by the electrolyte solution. For example, the surrounding member may be a combination of a pair of partitions facing each other and a pair of spacers disposed between the pair of sidewalls facing each other and the element. Note that the cells at both ends of the container are provided with a pair of sidewalls (first sidewalls) facing each other, a partition, and a sidewall (second sidewall) facing the partition. In this case, the surrounding member may be a combination of the pair of first sidewalls and a pair of spacers disposed between the partition and the second sidewall, and the element. The surrounding member may be a combination of a pair of spacers disposed between a pair of first sidewalls and the element, the partition, and the second sidewall.

The spacers are not necessarily disposed at positions facing each other, and the spacers may be disposed along the sidewall and the partition adjacent to the sidewall, or the spacers may be disposed along the pair of sidewalls facing each other and the partitions located between the sidewalls.

The lead-acid battery according to one aspect of the present invention will be described below.
(1) A lead-acid battery includes: an element; an electrolyte solution; and a surrounding member that faces a bottom-side peripheral surface of the element and is not permeated by the electrolyte solution. A first clearance is formed between the bottom-side peripheral surface of the element and the surrounding member. A ratio (= S1/S0) of a projected area S1 of the element in a vertical direction to an area S0 surrounded by a projected image of the surrounding member in the vertical direction is 0.90 or more.
(2) In (1) above, the surrounding member may be a part of at least one of the sidewall and the partition of the container housing the element and the electrolyte solution.
(3) In (1) above, the surrounding member may be a spacer that is disposed between the element and at least one of the sidewall and the partition of the container housing the element the electrolyte and is not permeated by the electrolyte solution.
(4) In (1) above, the surrounding member may be a combination of:
   (a) a part of at least one of the sidewall and the partition of the container housing the element and the electrolyte solution; and
   (b) a spacer that is disposed between the element and at least one of the sidewall and the partition of the container and is not permeated by the electrolyte solution.
(5) In any one of (1) to (4) above, the width of the first clearance may be smaller than a width of a second clearance formed between a top-side peripheral surface of the element and at least one of the sidewall and the partition of the container.
(6) In (1) above, the surrounding member may be a combination of (a2) and (b2) below:
   (a2) at least a part of at least one of the sidewall and the partition of the container housing the element and the electrolyte solution, and a portion of the bottom of the container; and
   (b2) a spacer that is disposed between the lid and the element of the lead-acid battery and is not permeated by the electrolyte solution.
(7) In (1) above, the surrounding member may be a spacer that is not permeated by the electrolyte solution, and the spacer may be disposed between at least one of the sidewall and the partition of the container housing the element and the electrolyte solution, the lid of the lead-acid battery, and the bottom of the container and the element.
(8) In (1) above, the surrounding member may be a combination of (a3) and (b3) below:
   (a3) at least a part of at least one of the sidewall, partition, and bottom of the container housing the element and the electrolyte solution; and
   (b3) a spacer that is not permeated by the electrolyte solution and disposed between the element and at least one of the sidewall, partition, and bottom of the container, housing the element and the electrolyte solution, and between the lid of the lead-acid battery and the element.
(9) In any one of (6) to (8) above, the width of the first clearance may be smaller than the width of the second clearance formed between at least one of the sidewall and the partition of the container, the lid of the lead-acid battery, and the bottom of the container and the top-side peripheral surface of the element.
(10) In any one of (5) or (9) above, the width of the first clearance may be smaller than the width of the second clearance on at least one peripheral surface of the four peripheral surfaces of the element.
(11) In any one of (5), (9) and (10) above, the width of the first clearance may be smaller than the width of the second clearance on two or more (or three or more) peripheral surfaces or four peripheral surfaces of the four peripheral surfaces of the element.
(12) In any one of (5) and (9) to (11) above, when the height of the element is H, the first clearance may be formed up to a position 0.5H or less from the bottom surface of the element.
(13) In any one of (5) and (9) to (12) above, when the height of the element is H, the first clearance may be formed up to a position of 0.3H or more or 0.4H or more from the bottom surface of the element.
(14) In any one of (5) and (9) to (13) above, the first clearance may be formed up to a position between a position 0.3H and a position 0.5H, and more preferably up to a position between a position 0.4H and a position 0.5H, from the bottom surface of the element.
(15) In any one of (1) to (14) above, S1/S0 may be 0.92 or more, 0.94 or more, or 0.95 or more.
(16) In any one of (1) to (15) above, S1/S0 may be less than 1, 0.99 or less, 0.98 or less, 0.94 or less, or 0.92 or less.
(17) In any one of (1) to (16) above, the element may include a negative electrode plate containing a negative electrode material.
(18) In (17) above, the negative electrode material may contain an organic expander.
(19) In (18) above, the content of the organic expander contained in the negative electrode material may be 0.01% by mass or more or 0.05% by mass or more.
(20) In (18) or (19) above, the content of the organic expander contained in the negative electrode material may be 1.0% by mass or less or 0.5% by mass or less.
(21) In any one of (17) to (20), the negative electrode material may contain carbonaceous material.
(22) In (21), the content of the carbonaceous material in the negative electrode material may be 0.05% by mass or more or 0.10% by mass or more.
(23) In (21) or (22) above, the content of the carbonaceous material in the negative electrode material may be 5% by mass or less or 3% by mass or less.
(24) In any one of (17) to (23) above, the negative electrode material may contain barium sulfate.
(25) In (24) above, the content of the barium sulfate in the negative electrode material may be 0.05% by mass or more or 0.1% by mass or more.
(26) In (24) or (25) above, the content of barium sulfate in the negative electrode material may be 3% by mass or less or 2% by mass or less.
(27) In any one of (1) to (26) above, the specific gravity of the electrolyte solution at 20°C in the lead-acid battery in a fully charged state may be 1.20 or more or 1.25 or more.
(28) In any one of (1) to (27) above, the specific gravity of the electrolyte solution at 20°C in the lead-acid battery in the fully charged state may be 1.35 or less or 1.32 or less.

### [Example]

Hereinafter, the present invention will be specifically described on the basis of examples and comparative examples, but the present invention is not limited to the following examples.

### <<Lead-acid battery A1>>

### (1) Preparation of lead-acid battery

### (a) Preparation of negative electrode plate

Lead powder as raw material, barium sulfate, carbon black, and an organic expander are mixed with an appropriate amount of a sulfuric acid aqueous solution to obtain a negative electrode paste. A mesh portion of an expanded grid made of a Pb-Ca-Sn alloy is filled with the negative electrode paste, which is then cured and dried to obtain a non-chemically converted negative electrode plate.

### (b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-chemically converted positive electrode plate.

### (c) Separator

As the separator, a bag-shaped separator made by folding a microporous film into two and press-bonding two sides intersecting the fold is used. The microporous film is obtained by extruding a composition containing a polyethylene powder, a silica powder, and oil into a sheet shape and then extracting the oil to form pores.

### (d) Preparation of lead-acid battery

The negative electrode plate is housed in a bag-shaped separator. An element is formed of six negative electrode plates and six positive electrode plates.

The element is housed into a container made of polypropylene together with an electrolyte solution to assemble a lead-acid battery. In the lead-acid battery, the surrounding member is formed such that the S1/S0 ratio obtained by the procedure described above is the value shown in Table 1. Specifically, in the preparation of the lead-acid battery, the first clearance is formed by forming the bottom side of at least one of the sidewall and the partition of the container thicker than the other portion so as to protrude inward. More specifically, the thickness of at least one of the sidewall and the partition on the bottom side is increased such that at least one of the sidewall and the partition on the bottom side protrudes 2 mm toward the peripheral surface of the element. When the height of the element is H, the height of the first clearance is set to be 0.5H from the bottom surface of the element. The assembled battery is subjected to chemical conversion to complete a flooded-type lead-acid battery (55B20) A1 for an automobile. The output of the lead-acid battery A1 is 12 V, and the rated 5-hour rate capacity is 30 Ah. The specific gravity of the electrolyte solution after chemical conversion at 20°C is 1.28. The negative electrode material after chemical conversion contains 0.5% by mass of BaSO4, 0.2% by mass of carbon black, and 0.2% by mass of the organic expander.

### (2) Evaluation

### (a) Cycle life test of lead-acid battery

Using a lead-acid battery, discharge is performed for one hour at a 5-hour rate current in a constant temperature bath at 40°C ± 0.5°C, and constant voltage constant current charge at 2.467 V/cell is performed for two hours with a current limit set to a 5-hour-rate current. This discharge-charge cycle is repeated. The time point at which the voltage during discharge falls below 1.7 V/cell is defined as the life, and the number of cycles until that time is defined as the "number of life cycles".

### (b) Stratification evaluation test

In the cycle life test of the lead-acid battery, holes are made in advance at two positions of the battery lid, and a polyethylene resin tube having acid resistance of a predetermined length is attached to each of these holes such that an electrolyte solution can be collected. The length of the resin tube is set to a length at which the electrolyte solution can be collected from two heights of 0 mm and 120 mm from the bottom surface inside the container. Electrolytic solutions having heights of 0 mm and 120 mm are collected from the battery after 100 cycles with the resin tube, the specific gravity of the electrolyte solution is measured, and the difference in specific gravity is taken as the "difference in specific gravity at the 100th cycle".

### <<Lead-acid battery A2>>

As the surrounding member, a spacer having a rectangular, cylindrical shape made of polypropylene, which is not permeated by the electrolyte solution, is disposed between at least one of the sidewall and the partition wall of the container and the element to form the first clearance. The spacer is disposed on the bottom side of the element to surround the peripheral surface of the element. The thickness of the spacer is adjusted such that the value of the S1/S0 ratio becomes the value of Table 1. Except for the above, a lead-acid battery A2 is produced and evaluated similarly to the lead-acid battery A1.

### <<Lead-acid batteries A3 to A5 and B1 to B3>>

Lead-acid batteries A3 to A5 and B1 to B3 are prepared and evaluated similarly to lead-acid battery A1 except that the width of the first clearance is controlled by changing the thickness of at least one of the sidewall and the partition on the bottom side so as to obtain the value of S1/S0 shown in Table 1. Table 1 shows the evaluation results. Table 1 also shows the surrounding member and S1/S0 ratio of each lead-acid battery. The life cycle is expressed as a ratio (%) when the number of life cycles of the lead-acid battery B3 is 100 (%).

**[Table 1]**

| | Surrounding member | S1/S0 | Specific gravity difference at 100th cycle | Life cycle (%) |
|---|---|---|---|---|
| A1 | Sidewall/Partition | 0.92 | 0.086 | 243 |
| A2 | Spacer | 0.92 | 0.092 | 245 |
| A3 | Sidewall/Partition | 0.98 | 0.085 | 242 |
| A4 | Sidewall/Partition | 0.94 | 0.087 | 241 |
| A5 | Sidewall/Partition | 0.90 | 0.085 | 244 |
| B1 | Sidewall/Partition | 0.86 | 0.185 | 102 |
| B2 | Sidewall/Partition | 0.83 | 0.176 | 98 |
| B3 | Sidewall/Partition | 0.70 | 0.182 | 100 |

As shown in Table 1, in the lead-acid batteries A1 to A5 having S1/S0 of 0.90 or more, the difference in specific gravity at the 100th cycle is greatly reduced as compared with the lead-acid batteries B1 to B3 having S1/S0 of less than 0.90, and stratification is remarkably prevented. In the lead-acid batteries A1 to A5, the life cycle is improved as compared with B1 to B3. This is considered to be because the durability of the lead-acid battery was improved by preventing the stratification. In the lead-acid batteries A1 to A5, excellent results were obtained regardless of whether the surrounding member was the sidewall or the partition of the container or the spacer. These results indicate that the control of the first clearance (i.e., control of the S1/S0 ratio) has an extremely large influence on the degree to which the stratification proceeds or the durability of the lead-acid battery.

### <<Lead-acid batteries A6 to A8 and B4>>

Lead-acid batteries A6 to A8 and B4 are prepared and evaluated similarly to the lead-acid battery A1 except that the height of the first clearance is changed as shown in Table 2.

Table 2 shows the results for the lead-acid batteries A6 to A8 and B4 together with the results for the lead-acid batteries A1 and B3. Table 2 also shows the S1/S0 ratio and the height ratio of the first clearance. Note that the life cycle is expressed as a ratio (%) when the number of life cycles of the lead-acid battery B3 is 100 (%).

**[Table 2]**

| | S1/S0 | Height ratio of first clearance | Specific gravity difference at 100th cycle | Life cycle (%) |
|---|---|---|---|---|
| A1 | 0.92 | 1/2H (50%) | 0.086 | 243 |
| A6 | | 2/5H (40%) | 0.092 | 241 |
| A7 | | 1/3H (33%) | 0.118 | 221 |
| A8 | 0.92 | 1/4H (25%) | 0.135 | 183 |
| B3 | 0.70 | 1/2H (50%) | 0.182 | 100 |
| B4 | 0.85 | 1/4H (25%) | 0.185 | 122 |

As shown in Table 2, when S1/S0 is 0.90 or more, and the height of the first clearance is 0.5H or less of the height H of the element, the stratification is prevented in all cases as compared with the lead-acid battery B3, and an excellent life cycle can be obtained. When the height of the first clearance exceeds 0.5H, the influence due to the decrease in the amount of the electrolyte solution tends to increase, and the capacity may decrease. Further, even when the height of the first clearance is made larger than 0.5H, the effect of preventing stratification is not so large. Therefore, the height of the first clearance is preferably 0.5H or less from the viewpoint that the effect of preventing stratification is high, and the high capacity can be easily ensured. From the viewpoint of obtaining a higher effect of preventing stratification, the height of the first clearance is preferably 0.3H or more, and more preferably 0.4H or more.

While the present invention has been described with respect to presently preferred embodiments, such disclosure should not be construed in a limiting manner. Various modifications and modifications will undoubtedly become apparent to those skilled in the art to which the present invention belongs upon reading the above disclosure. Accordingly, the appended claims should be construed to encompass all variations and modifications without departing from the true spirit and scope of the present invention.

### INDUSTRIAL APPLICABILITY

The lead-acid battery according to one aspect of the present invention is applicable to, for example, a flooded-type lead-acid battery. The lead-acid battery can be suitably used as a power source for starting a vehicle (automobiles, motorcycles, etc.) and a power source for an industrial energy storage apparatus or the like (e.g., an electric vehicle (forklift)). Note that these applications are merely illustrative and not limited to these applications.

### DESCRIPTION OF REFERENCE SIGNS

1: lead-acid battery
2: negative electrode plate
3: positive electrode plate
4: separator
5: positive strap portion
6: negative strap portion
7: positive pole
8: inter-cell connector
9: negative pole
10: container
11: element
11a: peripheral surface of element
11b: bottom of element
11c: top of element
12: sidewall
12a: bottom-side portion of sidewall
12b: portion except for bottom side of sidewall
13: partition
13a: bottom-side portion of partition
13b: portion except for bottom side of partition
14: cell chamber
14a: sidewall
14b: other portion
15: lid
16: negative electrode terminal
17: positive electrode terminal
18: vent plug
19, 19a, 19b: surrounding member
20: first clearance
21: second clearance
22, 23: spacer

## Claims

1. A lead-acid battery comprising:
an element;
an electrolyte solution; and
a surrounding member that faces a bottom-side peripheral surface of the element and is not permeated by the electrolyte solution,
wherein a first clearance is formed between the bottom-side peripheral surface of the element and the surrounding member, and
a ratio of a projected area S1 of the element in a vertical direction to an area S0 surrounded by a projected image of the surrounding member in the vertical direction is 0.90 or more.

2. The lead-acid battery according to claim 1, wherein the surrounding member is a part of at least one of a sidewall and a partition of a container housing the element and the electrolyte solution.

3. The lead-acid battery according to claim 1, wherein the surrounding member is a spacer that is disposed between the element and at least one of a sidewall and a partition of a container housing the element the electrolyte solution and is not permeated by the electrolyte solution.

4. The lead-acid battery according to claim 1, wherein the surrounding member is a combination of a spacer and a part of at least one of a sidewall and a partition of a container, the container housing the element and the electrolyte solution and
the spacer is disposed between the element and at least one of a sidewall and the partition of the container and is not permeated by the electrolyte solution.

5. The lead-acid battery according to claim 1 to 4, wherein a width of the first clearance is smaller than a width of a second clearance formed between a top-side peripheral surface of the element and at least one of the sidewall and the partition of the container.

6. The lead-acid battery according to claim 5, wherein the width of the first clearance is smaller than the width of the second clearance on three or more peripheral surfaces of four peripheral surfaces of the element.

7. The lead-acid battery according to claim 5 or 6, wherein when a height of the element is H, the first clearance is formed up to a position 0.5H or less from a bottom surface of the element.

8. The lead-acid battery according to claim 5 to 7, wherein, when the height of the element is H, the first clearance is formed up to a position 0.3H or more from the bottom surface of the element.

9. The lead-acid battery according to claim 5 to 8, wherein, when the height of the element is H, the first clearance is formed up to a position 0.4H or more from the bottom surface of the element.

10. The lead-acid battery according to any one of claims 1 to 9, wherein the ratio is less than 1.
